# EUROPÄISCHE PATENTANMELDUNG

(11) **EP 1 231 769 A2**
(43) Veröffentlichungstag der Anmeldung: **14.08.2002**
(21) Anmeldenummer: 01129508.6
(22) Anmeldetag: 11.12.2001
(51) Int. Cl.: H04N 1/04

(54) **Mehrstrahl-Abtastvorrichtung zur Abtastung eines fotoempfindlichen Materials mit einem Multi-Spot-Array sowie Verfahren zur Korrektur der Position von dadurch erzeugten Bildpunkten**

(30) Priorität: 09.02.2001 DE 10105978
(71) Anmelder: Heidelberger Druckmaschinen Aktiengesellschaft, 69115 Heidelberg (DE)
(72) Erfinder: Fischer, Jörg-Achim, 24235 Laboe (DE); Gebhardt, Axel, 24248 Mönkeberg (DE); Jacobsen, Thomas, 24111 Kiel (DE); Sievers, Horst, 24211 Preetz (DE); Steinke, Dirk, 24247 Mielkendorf (DE)

(57) **Zusammenfassung**

Die Erfindung betrifft eine Mehrstrahl-Abtastvorrichtung (6) zur Abtastung eines fotoempfindlichen Materials (3) mit einem Multi-Spot-Array, umfassend eine Mehrzahl von Fiberlaser-Fiberexits (19), die jeweils lösbar in eine Aufnahme (23) einer Halterung (18) der Mehrstrahl-Abtastvorrichtung (6) eingesetzt sind. Die Erfindung betrifft weiter ein Verfahren zur Korrektur der Position von Bildpunkten eines Multi-Spot-Arrays, das durch Abbildung einer Mehrzahl von Fiberlaser-Fiberexits (19) einer Mehrstrahl-Abtastvorrichtung (6) auf einem in Bezug zur Mehrstrahl-Abtastvorrichtung (6) bewegten fotoempfindlichen Material (3) und durch Unterbrechung, Ablenkung und/oder Intensitätsmodulation von aus den Fiberexits (19) austretenden Laserstrahlenbündeln (14) erzeugt wird. Um eine Erzeugung eines sehr präzisen Multi-Spot-Arrays zu ermöglichen, das bei Verwendung des fotoempfindlichen Materials als Druckvorlage keine sichtbaren störenden Muster auf dem Endprodukt verursacht, wird erfindungsgemäß vorgeschlagen, die Fiberexits (19) jeweils mit einem zuvor festgelegten Drehwinkel in Bezug zu ihrer Achse in eine Aufnahme (23) einer Halterung (18) der Mehrstrahl-Abtastvorrichtung (6) einzusetzen, so dass sämtliche Bildpunkte in Bezug zu ihrer Soll-Position im Wesentlichen die gleiche Winkelausrichtung aufweisen, und anschließend die Abstände der einzelnen Bildpunkte von ihren Soll-Positionen, soweit erforderlich, durch Ablenkung der Laserstrahlenbündel (14) und/oder durch Verzögerung des Auftreffzeitpunkts der Laserstrahlenbündel (14) auf dem fotoempfindlichen Material (3) auf Null oder nahe Null zu verkleinern.

## Beschreibung

Die Erfindung bezieht sich auf das Gebiet der elektronischen Reproduktionstechnik, insbesondere auf die Lasergravur von Druckplatten aber auch auf die Laserbelichtung von Film mit einem Multi-Spot-Array. Spezieller betrifft die Erfindung zum einen eine Mehrstrahl-Abtastvorrichtung zur Abtastung eines fotoempfindlichen Materials mit einem Multi-Spot-Array, umfassend eine Mehrzahl von Fiberlaser-Fiberexits, die jeweils lösbar in eine Aufnahme einer Halterung der Mehrstrahl-Abtastvorrichtung eingesetzt sind, sowie zum anderen ein Verfahren zur Korrektur der Position von Bildpunkten eines Multi-Spot-Arrays, das durch Abbildung einer Mehrzahl von Fiberlaser-Fiberexits auf einem in Bezug dazu bewegten fotoempfindlichen Material und durch Unterbrechung, Ablenkung und/oder Intensitätsmodulation von aus den Fiberexits austretenden Laserstrahlenbündeln erzeugt wird.

Bei der Lasergravur von Flexo-Druckplatten in einem Laserbelichter wird die zu bearbeitende Druckplatte auf eine rotierende Trommel aufgespannt und zur Erhöhung der Bearbeitungsgeschwindigkeit gleichzeitig mit mehreren Laserstrahlenbündeln abgetastet, um die lasersensitive Schicht in den späteren Druckbereichen der Druckplatte entsprechend einem vorgegebene Raster punktförmig abzutragen. Zur Bereitstellung der für die Lasergravur erforderlichen Leistung sind die Mehrstrahl-Abtastvorrichtungen oder Laserbearbeitungsköpfe der verwendeten Laserbelichter mit Fiberlasern ausgestattet, deren Fiberexits nebeneinander angeordnet und so zur Trommel bzw. Druckplatte hin ausgerichtet sind, dass die letztere mit einem linearen Multi-Spot-Array abgetastet wird. Die Mehrstrahl-Abtastvorrichtungen oder Laserbearbeitungsköpfe umfassen weiter ein Optiksystem zur Abbildung der Fiberexits und zur Fokussierung der Laserstrahlenbündel auf der Druckplattenoberfläche, sowie Einrichtungen zur selektiven Unterbrechung, Ablenkung und/oder Intensitätsmodulation der einzelnen Laserstrahlenbündel. Eine solche Mehrstrahl-Abtastvorrichtung ist in der noch unveröffentlichten Deutschen Patentanmeldung DE 100 24 456.4 der Anmelderin beschrieben.

Zur Montage von Fiberexits auf einem Laserbearbeitungskopf oder dergleichen ist es weiter bekannt, die mit Mikro- oder Kollimatorlinsen bestückten Fiberexits so in Präzisionsbohrungen oder V-förmige Aufnahmennuten einer Halterung einzusetzen, dass sie die gewünschte Ausrichtung besitzen. Aufgrund von Fertigungstoleranzen bei der Herstellung der Fiberexits, bei der Bestückung mit den Linsen und bei der Herstellung der Halterung bzw. der Fiberexit-Aufnahmen kommt es jedoch in der Praxis zu Richtungsabweichungen der Laserstrahlenbündel von ihrer vorgesehenen optischen Achse, die sich in Form von Positionsfehlern, d.h. Auslenkungen einzelner Bildpunkte des Multi-Spot-Arrays in beliebiger Richtung aus ihrer Soll-Position, bemerkbar machen. Infolge ihres wiederholten Auftretens während der Abtastung führen diese Positionsfehler bei der Bearbeitung von Druckplatten oder bei der Bildaufzeichnung auf einem Film zu störenden Mustern und damit zu einer Qualitätsverschlechterung.

Die größten Positionsabweichungen werden gewöhnlich durch sogenannte Pointingfehler der Fiberexits verursacht, das heißt die Winkelabweichung eines abgestrahlten Laserstrahlenbündels in Bezug zu einer Zylinderachse eines zur Montage des Fiberexits und der Kollimatorlinse dienenden Kapillarrohrs.

Aus einem Zeitschriftenartikel mit dem Titel "180 mega-pixel per second optical image recording" von Bernard M. Rosenheck, SPIE Vol. 299 Advances in Laser Scanning Technology (1981) ist es bereits an sich bekannt, eine elektronische Justierung von Bildpunkten eines zweidimensionalen Multi-Spot-Arrays durch Auslenkung von Laserstrahlenbündeln mittels eines akustooptischen Modulators vorzunehmen. Auch eine elektronische Verschiebung von Bildpunkten durch zeitverzögerte Beaufschlagung von akustooptischen Modulatoren mit Spannungssignalen ist bei Laserbelichtern an sich bekannt.

Ausgehend hiervon liegt der Erfindung die Aufgabe zugrunde, eine Mehrstrahl-Abtastvorrichtung und ein Korrekturverfahren der eingangs genannten Art bereitzustellen, mit denen sich Multi-Spot-Arrays mit hoher Präzision erzeugen lassen, so dass bei Verwendung des fotoempfindlichen Materials als Druckvorlage keine störenden Muster auf dem Endprodukt sichtbar sind.

Diese Aufgabe wird erfindungsgemäß durch die in den Patentansprüchen 1 und 12 angegebenen Merkmalskombinationen gelöst. Bevorzugte Ausgestaltungen der Erfindung finden sich in den untergeordneten Ansprüchen 2 bis 11 und 13 bis 20.

Der Erfindung liegt der Gedanke zugrunde, durch eine übereinstimmende Winkelausrichtung sämtlicher Bildpunkte des Multi-Spot-Arrays in Bezug zu ihrer jeweiligen Soll-Position die Voraussetzung für eine elektronische Justierung durch Ablenkung und/oder Laufzeitverzögerung der Laserstrahlenbündel zu schaffen, mit der sämtliche Laserstrahlenbündel so weit in die gleiche Richtung, nämlich in Richtung ihrer Soll-Position, verschoben werden, bis ihr Abstand zu dieser Soll-Position Null oder nahezu Null beträgt.

Die Verwendung komplementärer Ausrichteinrichtungen auf den Fiberexits und der Halterung der Mehrstrahl-Abtastvorrichtung ermöglichen beim Zusammenbau der letzteren sowie beim Austausch eines defekten Fiberexits eine schnelle Montage in der für die elektronische Justierung erforderlichen Ausrichtung.

Im einfachsten Fall können die komplementären Ausrichteinrichtungen eines Fiberexits und der Halterung aus einer auf den Fiberexit aufgedruckten oder aufgemalten Farbmarkierung bestehen, die in eine bestimmte Richtung, zum Beispiel senkrecht nach oben weist, und mit einer entsprechenden Markierung der Halterung fluchtet, sobald das Fiberexit mit dem zuvor festgelegten Drehwinkel in die Aufnahme eingesetzt ist. Vorzugsweise besteht die Ausrichteinrichtung der Fiberexits jedoch aus einem radial über den Fiberexit überstehenden Element, das formschlüssig mit einem komplementären Element der Halterung in Eingriff gebracht werden kann, wenn das Fiberexit in der Aufnahme den zuvor festgelegten Drehwinkel aufweist.

Die zeitaufwendigere Bestimmung des Pointingfehlers jedes Fiberexits und die anschließende Festlegung der Ausrichteinrichtung in der richtigen Drehlage auf dem Fiberexit können beim Hersteller der Mehrstrahl-Abtastvorrichtung erfolgen, wo geeignete Justiereinrichtungen zur Verfügung stehen. Diese weisen vorzugsweise eine der Halterung der Mehrstrahl-Abtastvorrichtung entsprechende Halterung mit einer Fiberexit-Aufnahme auf, in welche die Fiberexits nacheinander eingesetzt und um ihre Achse gedreht werden. Bei eingeschaltetem Laser beschreibt dabei ein auf einem Positionsdetektor der Justiereinrichtung erzeugter Bildpunkt eine Kreisbahn, deren Durchmesser umso größer ist, je größer der Pointingfehler des Fiberexits ist. Sobald der Bildpunkt eine vorgegebene Winkelausrichtung in Bezug zu einem Koordinatennullpunkt des Positionsdetektors aufweist, wird die Ausrichteinrichtung in einer festen Winkelbeziehung am Fiberexit angebracht, und zwar so, dass sie bei sämtlichen justierten Fiberexits in dieselbe Richtung weist.

Die elektronische Justierung jedes Bildpunkts zur Verkleinerung seines Abstands von der jeweiligen Soll-Position durch Ablenkung des Laserstrahlenbündels erfolgt bevorzugt mit Hilfe eines im Strahlengang zwischen dem Fiberexit und dem fotoempfindlichen Material angeordneten akustooptischen Modulators, der bei vielen Belichtern bereits vorhanden ist und dort zur Unterbrechung oder Ablenkung und/oder zur Intensitätsmodulation des Laserstrahlenbündels dient.

Auch die Verkleinerung des Abstands eines Bildpunkts von seiner Soll-Position durch Verzögerung des Auftreffzeitpunkts des Laserstrahlenbündels kann mit Hilfe des akustooptischen Modulators erfolgen, indem man die zur Unterbrechung oder Ablenkung und/oder zur Intensitätsmodulation der Laserstrahlenbündel an den akustooptischen Modulator angelegten Spannungssignale mit einer den Abstand des jeweiligen Bildpunkts von der Soll-Position berücksichtigenden Zeitverzögerung zuführt.

Zur Korrektur von Pointingfehlern der Fiberexits wäre grundsätzlich eine der beiden genannten Alternativen, nämlich Ablenkung der Laserstrahlenbündel oder Verzögerung des Auftreffzeitpunkts der Laserstrahlenbündel ausreichend, wenn der Drehwinkel der Fiberexits in der Halterung so festgelegt wird, dass die Bildpunkte durch die Ablenkung bzw. durch die Zeitverzögerung genau in Richtung ihrer Soll-Position verschoben werden.

Da jedoch nicht nur die Fiberexits selbst sondern auch die Halterung und die Fiberexit-Aufnahmen der Halterung mit Fertigungstoleranzen behaftet sind, sieht eine weitere bevorzugte Ausgestaltung der Erfindung vor, die Abstände zwischen den Bildpunkten und deren Soll-Position sowohl durch Ablenkung als auch durch Zeitverzögerung der Laserstrahlenbündel zu verkleinern, wobei die beiden Maßnahmen abwechselnd durchgeführt werden, um eine iterative Annäherung an die jeweilige Soll-Position zu bewirken. Dem kommt entgegen, dass bei den zur Filmbelichtung oder Lasergravur verwendeten Trommel-Belichtern ein Bildpunkt des Multi-Spot-Arrays durch die Ablenkung bzw. durch die Zeitverzögerung des Laserstrahlenbündel im akustooptischen Modulator in einem zwei im Wesentlichen zueinander senkrechte Richtungen verschoben wird, so dass die Annäherung an die Soll-Position in kleiner werdenden stufenförmigen Schritten erfolgen kann.

Im folgenden wird die Erfindung anhand einiger in der Zeichnung dargestellter Ausführungsbeispiele näher erläutert. Es zeigen:
Fig. 1: eine perspektivische Ansicht einer erfindungsgemäßen Vorrichtung zur Lasergravur von Flexo-Druckplatten auf einer rotierenden Trommel mit einem linearen Multi-Spot-Array;
Fig. 2: eine schematische Darstellung des Strahlengangs in einem Mehrstrahl- Laserbearbeitungskopf der Vorrichtung aus Fig. 1 mit einer Reihe von Fiberexits;
Fig. 3: eine teilweise geschnittene Ansicht einer Fiberexit-Halterung des Laserbearbeitungskopfs, entsprechend der Ansicht aus Fig. 2;
Fig. 4: eine teilweise geschnittene Ansicht der Fiberexit-Halterung des Laserbearbeitungskopfs entlang der Linie IV-IV in Fig. 3;
Fig. 5: eine teilweise geschnittene vergrößerte und vereinfachte Ansicht eines Fiberexits und des Strahlengangs in dessen Nähe;
Fig. 6: eine perspektivische Ansicht eines zur Modulation der Laserstrahlenbündel und zur elektronischen Korrektur der Position der Bildpunkte des Multi-Spot-Arrays verwendeten linearen AOM-Arrays;
Fig. 7: eine stark vergrößerte schematische Ansicht der Bildpunkte eines idealen linearen Multi-Spot-Arrays auf der Oberfläche einer auf der Trommel aufgespannten Flexo-Druckplatte einschließlich Lichtintensitätsverteilung;
Fig. 8: eine Ansicht entsprechend Fig. 7, jedoch nach einem Kippen des Laserbearbeitungskopfs und des Multi-Spot-Arrays zur Erzielung von Linienanschluss;
Fig. 9: eine stark vergrößerte schematische Ansicht eines linearen Multi-Spot-Arrays, dessen Bildpunkte infolge von Pointingfehlern der Fiberexits unterschiedlich weit aus ihren Soll-Positionen heraus in beliebige Richtungen verschoben sind;
Fig. 10: eine Ansicht des Multi-Spot-Arrays aus Fig. 9 nach einer Drehung der Fiberexits in eine Winkellage, in der alle Bildpunkte in Bezug zu ihren Soll-Positionen dieselbe Winkelausrichtung aufweisen;
Fig. 11: eine Ansicht entsprechend Fig. 10, jedoch nach einem Kippen des Laserbearbeitungskopfs und des Multi-Spot-Arrays zur Erzielung von Linienanschluss;
Fig. 12: eine Ansicht des Multi-Spot-Arrays aus Fig. 9 nach einer Drehung der Fiberexits in eine andere Winkellage, in der ebenfalls alle Bildpunkte in Bezug zu ihren Soll-Positionen dieselbe Winkelausrichtung aufweisen;
Fig. 13: eine Ansicht entsprechend Fig. 12, jedoch nach einem Kippen des Laserbearbeitungskopfs und des Multi-Spot-Arrays zur Erzielung von Linienanschluss;
Fig. 14: eine Ansicht des Multi-Spot-Arrays entsprechend Fig. 9 nach einer Drehung der Fiberexits entsprechend Fig. 10, wobei jedoch infolge von Fertigungstoleranzen der Halterung nicht alle Bildpunkte in Bezug zu ihren Soll-Positionen dieselbe Winkelausrichtung aufweisen.

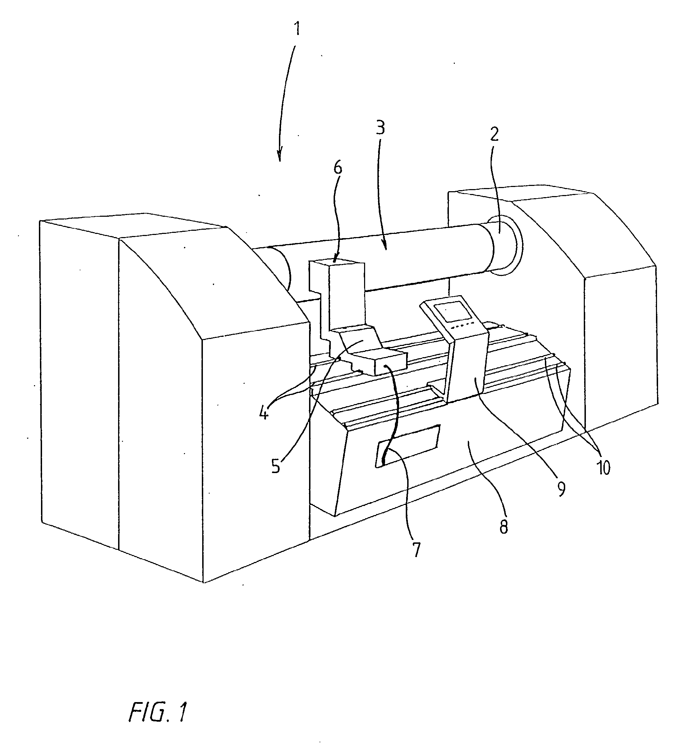

Die in Fig. 1 dargestellte Vorrichtung (1) zur Lasergravur von Flexo-Druckplatten besteht im Wesentlichen aus einer zwischen zwei seitlichen Halterungen drehbar eingespannten Trommel (2), auf deren Umfangsfläche die zu bearbeitenden Flexo-Druckplatten (3) aufgespannt werden, einem Drehantrieb (nicht dargestellt) zum Drehen der Trommel (2) und einer darauf aufgespannten Druckplatte (3), einem auf Führungen (4) in axialer Richtung der Trommel (2) und der Druckplatte (3) verfahrbaren Schlitten (5), einem auf dem Schlitten (5) montierten Laserbearbeitungskopf (6), der durch ein Bündel von acht Faserlichtleitern (7) mit einem Mehrstrahl-YAG-Laser (nicht sichtbar) in einem stationären Unterteil (8) der Vorrichtung (1) verbunden ist, sowie einem Steuerpult (9), das ebenfalls auf Führungen (10) in axialer Richtung entlang der Trommel (2) beweglich ist.

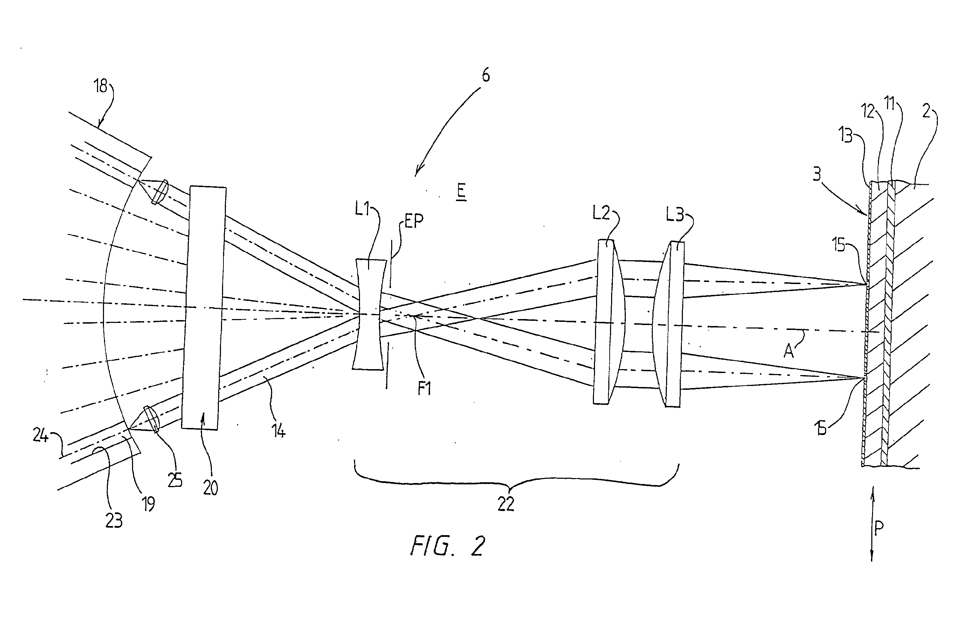

Wie am besten in Fig. 2 dargestellt, besteht die auf die Trommel (2) aufgespannte handelsübliche Flexo-Druckplatte (3) zur Lasergravur in bekannter Weise im Wesentlichen aus einer unteren Trägerschicht (11) aus Metall oder Kunststoff, vorzugsweise einer Polyesterfolie, einer auf die Oberseite der Trägerschicht (11) aufgebrachten Photopolymerschicht (12), enthaltend ungesättigte Monomere und elastomere Bindemittel, die bei einer Belichtung mit UVA-Licht zu langkettigen Polymeren vernetzt werden, sowie einer auf die Oberseite der Photopolymerschicht (12) aufgebrachten, für UV-Strahlung undurchlässigen lasersensitiven Schicht (13).

Während der Lasergravur wird die Flexo-Druckplatte (3) entsprechend einem vorgegebenen Punktraster gleichzeitig mit acht auf die lasersensitive Schicht (13) fokussierten Laserstrahlenbündeln (14) abgetastet, wie in Fig. 2 durch zwei der Laserstrahlenbündel (14) schematisch dargestellt. Dabei wird die lasersensitive Schicht (13) an den Auftreffpunkten (15) der Laserstrahlenbündel (14), die beim späteren Druckvorgang Druckfarbe übertragen sollen, durch Ablation entfernt, während sie in den übrigen Bereichen erhalten bleibt. Die Ablation ist ein thermischer Prozess, bei dem die lasersensitive Schicht (13) unter Bildung punktförmiger Öffnungen bis zur Photopolymerschicht (12) verdampft und dadurch abgetragen wird. Bei einer anschließenden Bestrahlung mit UV-Licht härtet die Photopolymerschicht (12) unter den Öffnungen aus und wird im Gegensatz zu den übrigen Bereichen bei der nachfolgenden Entwicklung nicht ausgewaschen. Die Wellenlänge der von den YAG-Lasern emittierten Laserstrahlung liegt im Infrarotbereich, während das Photopolymer im UV-Bereich empfindlich ist, so dass es bei der Abtastung mit den Laserstrahlenbündeln (14) nicht vom Laserlicht beeinflusst wird. Die Abtastung der Flexo-Druckplatte (3) erfolgt in einem vorgegebenen Punktraster, das von einem Rasterimageprozessors (nicht dargestellt) aus der auf die Druckplatte (3) zu übertragenden Schrift- oder Bildinformation in Form von digitalen Pixeldaten erzeugt wird.

Der in axialer Richtung (P) der Trommel (2) entlang der Druckplatte (3) bewegliche 8-Kanal-Laserbearbeitungskopf (6) besteht im Wesentlichen aus einer Halterung (18) für die Fiberexits (19) der acht Faserlichtleiter (7), einem linearen AOM-Array (20) zur Intensitätsmodulation der einzelnen Laserstrahlenbündel (14), sowie einem aus drei Linsen (L1, L2 und L3) bestehenden f-θ - Optiksystem (22), mit dem die Fiberexits (19) als lineares Multi-Spot-Array telezentrisch auf der Oberfläche der Druckplatte (3) abgebildet werden.

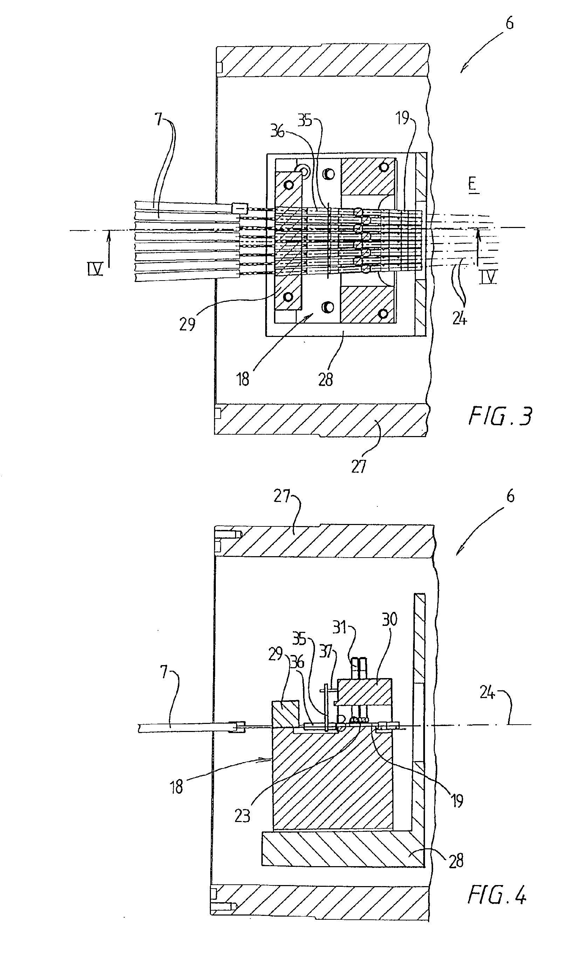

Wie am besten in den Figuren 3 und 4 dargestellt, sind die Fiberexits (19) mit einem Winkelabstand von etwa 10 mrad fächerförmig nebeneinander in V-förmige Aufnahmenuten (23) der Halterung (18) eingesetzt, so dass sich die in einer Ebene (E) liegenden optischen Achsen (24) der aus den Fiberexits (19) austretenden Laserstrahlenbündel (14) nach dem Hindurchtritt durch das AOM-Array (20) in einer Eintrittspupille (EP) des Optiksystems (22) schneiden, wie in Fig. 2 schematisch mit größeren Winkelabständen dargestellt, wenn sie zur Abbildung der Fiberexits (19) auf der Druckplatte (3) in den AOMs (21) des AOM-Arrays (20) in die 1. Ordnung abgelenkt worden sind.

Die in einem zylindrischen Montagerohr (27) des Laserbearbeitungskopfs (6) auf einem Träger (28) montierte Halterung (18) weist einen von der Trommel (2) abgewandten hinteren Befestigungsteil (29) für die Fiberexits (19) auf, in dem diese zur Zugentlastung eingespannt sind, sowie einen der Trommel (2) zugewandten vorderen Aufnahmeteil (30), in dem jedes der Fiberexits (19) von einem federbelasteten Stempel (31) nach unten in die zugehörige Aufnahmenut (23) gedrückt wird.

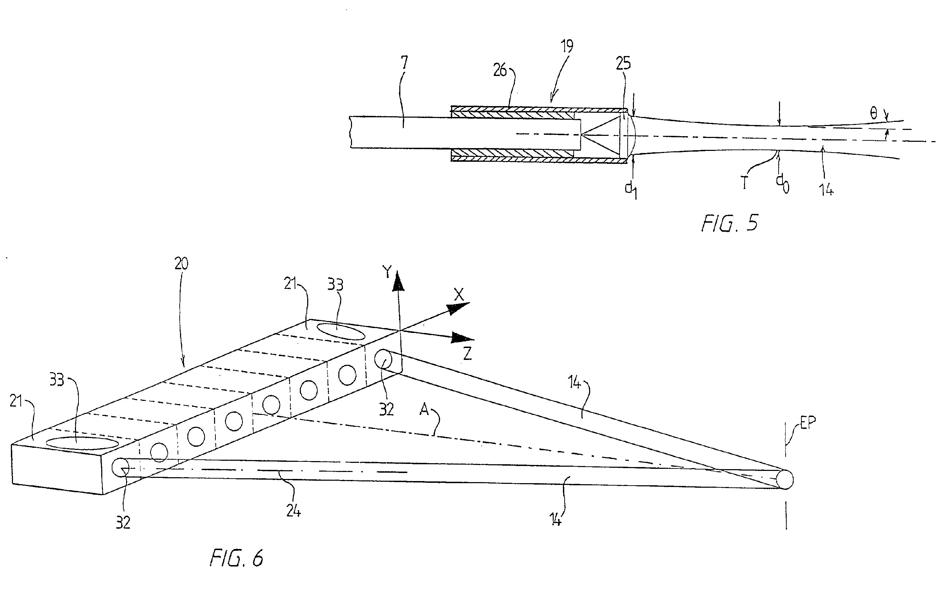

Wie am besten in Fig. 5 dargestellt, bestehen die Fiberexits (19) im Wesentlichen aus einem zylindrischen Kapillarrohr (26), in dessen eines Stirnende das Ende von einem der Faserlichtleiter (7) eingesetzt ist und dessen anderes Stirnende als Halterung für eine Kollimator- oder Mikrolinse (25) dient, welche die aus dem Fiberexit (19) austretenden Laserstrahlen bündelt. Die Brennweite f der Mikrolinse (25) liegt je nach numerischer Apertur des Faserlichtleiters zwischen f = 3 mm und f = 7 mm. Der Strahldurchmesser d des aus der Mikrolinse (25) austretenden Laserstrahlenbündels (14) verändert sich von einem Durchmesser d₁ von etwa 850 µm unmittelbar hinter der Mikrolinse (25) auf einen Taillendurchmesser d₀ von etwa 700 µm bei 1/e² und wächst dahinter mit einem Divergenzwinkel θ = 2λ/π d₀ von etwa 1 mrad bei einem Strahldurchmesser von d₀ = 700 µm wieder an, wie durch die gebogenen Randstrahlen veranschaulicht.

Wie am besten in Fig. 6 dargestellt, weist das im Bereich des Laserstrahlenbündel-Fächers angeordnete AOM-Array (20) jeweils einen AOM (21) für jedes Laserstrahlenbündel (14) auf. Die AOMs (21) entsprechen im Aufbau bekannten akustooptischen Modulatoren und umfassen einen für das Laserstrahlenbündel (14) durchlässigen Kristall (32) sowie einen piezoelektrischen Wandler (33) (nur zum Teil dargestellt), der Ultraschallwellen in den Kristall (32) abgibt, wenn ein Spannungssignal am Wandler (33) angelegt wird. Bei seinem Hindurchtritt durch den Kristall (32) wird das Laserstrahlenbündel (14) an den vom Wandler (33) erzeugten Ultraschallwellen gebeugt, wobei es in Abhängigkeit von der jeweiligen Amplitude des Spannungssignals entweder als Lichtstrahl 1. Ordnung zur Eintrittspupille (EP) des Optiksystems (22) und von dort zur Flexo-Druckplatte (3) gelenkt oder als Lichtstrahl 0. Ordnung ausgeblendet wird, je nachdem ob die lasersensitive Schicht (13) der Druckplatte (3) an der entsprechenden Stelle abgetragen werden soll oder nicht. Die Amplitude des Spannungssignals wird auf der Grundlage der Pixeldaten gesteuert.

Das AOM-Array (20) ist an einer Stelle im Strahlengang der Laserstrahlenbündel (14) angeordnet, an der die Abstände der einzelnen AOMs (21) den Abständen der zugehörigen Laserstrahlenbündel (14) entsprechen und ist so ausgerichtet, dass die Laserstrahlenbündel (14) jeweils annähernd unter dem Bragg-Winkel in eine optische Eintrittsfläche der AOMs (21) eintreten. Um den Beugungswirkungsgrad der AOMs (21) zu verbessern und die Laserstrahlenbündel (14) möglichst ohne Vignettierung durch die AOMs (21) hindurch zu leiten, sind die Wandler (33) auf den einzelnen AOMs (21) jeweils parallel zur optischen Achse (24) des hindurchtretenden Laserstrahlenbündels (14) ausgerichtet.

Das AOM-Array (20) und die Eintrittspupille (EP) des Optiksystems (22) befinden sich jeweils in einem solchen Abstand von der Taille T der Laserstrahlenbündel (14) (Fig. 5), dass sowohl die AOMs (21) als auch die Eintrittspupille (EP) innerhalb des Rayleigh-Abstandes liegen, innerhalb dessen der Durchmesser der Laserstrahlenbündel (14) auf d₀ x √2 anwächst.

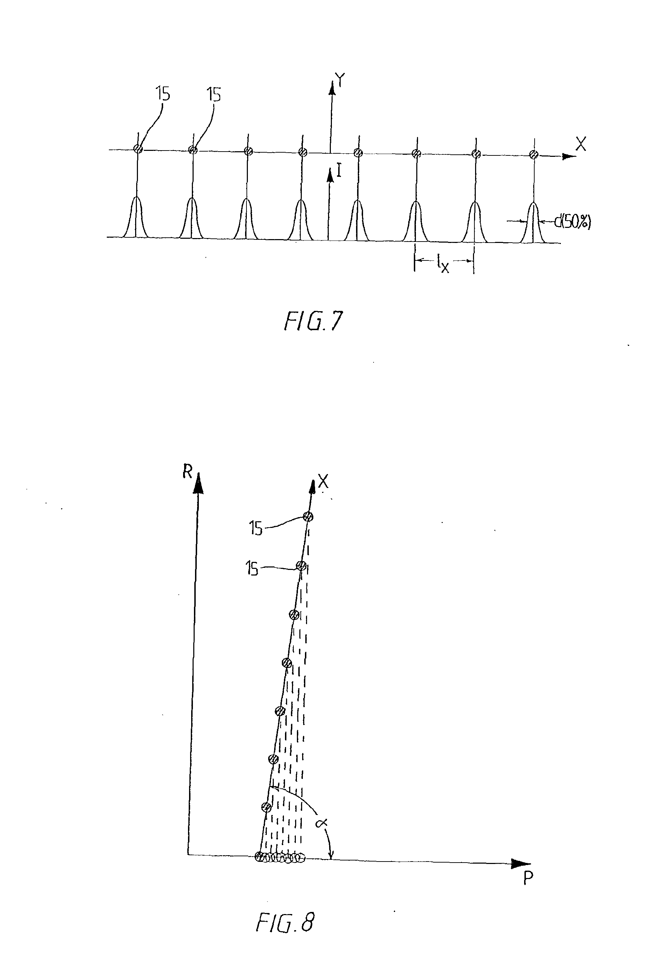

Idealerweise sind die aus den Mikrolinsen (25) der Fiberexits (19) austretenden Laserstrahlenbündel (14) parallel zu den jeweiligen Zylinderachsen der Kapillarrohre (26), und die Aufnahmenuten (23) weisen gleiche Winkelabstände und Höhen auf, wodurch die Fiberexits (19) auf der Druckplatte (3) theoretisch als ideales Multi-Spot-Array abgebildet werden, dessen Bildpunkte alle auf einer Achse (X) liegen und gleiche Abstände besitzen, wie in Fig. 7 dargestellt. Bei einem Winkelabstand der Fiberexits (19) von 10 mrad und einem Abstand/ Durchmesser-Verhältnis von 8 zu 1 in der Halterung (18) ergeben sich für die Auftreffpunkte (15) der acht Laserstrahlenbündel (14) auf der lasersensitiven Schicht (13) und damit für benachbarte Bildpunkte des linearen Multi-Spot-Arrays Mittenabstände Ix von etwa 160 µm und Spotdurchmesser d(50%) von etwa 20 µm.

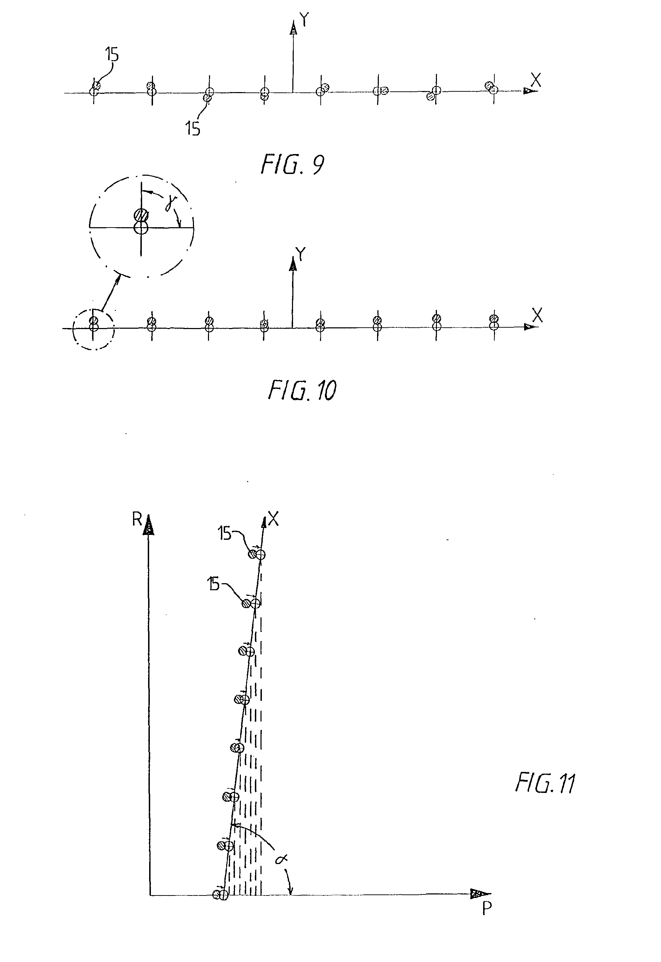

In der Praxis ist das Multi-Spot-Array jedoch nur selten ideal, zum einen weil die aus den Mikrolinsen (25) austretenden Laserstrahlenbündel (14) wegen sogenannter Pointingfehler der Fiberexits (19) mehr oder weniger große Winkelabweichungen von der Zylinderachse des Kapillarrohrs (26) aufweisen, und zum anderen weil auch die Aufnahmenuten (23) der Halterung (18) aufgrund von Fertigungstoleranzen nicht immer äquidistant und in gleicher Höhe angeordnet sind. Infolge der Pointingfehler weist zumindest ein Teil der Bildpunkte des Multi-Spot-Arrays auf der Druckplatte Abweichungen von der Soll-Position auf, wie in Fig. 9 etwas übertrieben dargestellt, wobei gewöhnlich sowohl die Abstände der Bildpunkte von ihren Soll-Positionen (als weiße Kreise dargestellt) als auch die Richtungen oder Winkelausrichtungen der Bildpunkte in Bezug zu ihren Soll-Positionen unterschiedlich sind.

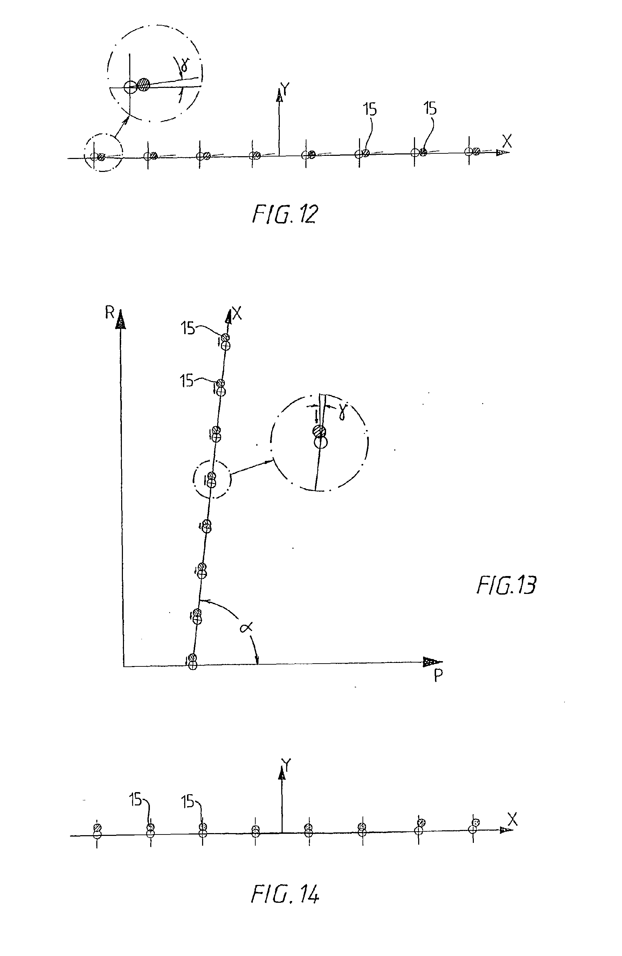

Zur Korrektur dieser Abweichungen von der jeweiligen Soll-Position werden erfindungsgemäß zuerst alle Fiberexits (19) mechanisch so in die Aufnahmenuten (23) eingesetzt, dass sämtliche Bildpunkte des Multi-Spot-Arrays in Bezug zu ihrer Soll-Position im Wesentlichen die gleiche Winkelausrichtung besitzen, wie in den Figuren 10 und 12 anhand zweier Beispiele dargestellt, bevor anschließend elektronisch die Abstände der einzelnen Bildpunkte von ihrer Soll-Position, soweit erforderlich, durch eine entsprechende Ablenkung der Laserstrahlenbündel (14) in den AOMs (21) und/oder durch eine entsprechende Verzögerung des Auftreffzeitpunkts der Laserstrahlenbündel (14) auf der Druckplatte (3) verkleinert werden. Die beiden elektronischen Korrekturschritte können jeweils einzeln oder abwechselnd nacheinander durchgeführt werden, bis die Abstände auf Null oder nahezu Null verkleinert sind.

Gleiche Winkelausrichtung bedeutet hier, dass die Richtungsvektoren von der jeweiligen Soll-Position zum jeweiligen Bildpunkt die gleichen Winkel (γ) mit der durch alle Soll-Positionen verlaufenden Achse (X) und vorzugsweise die gleichen Vorzeichen aufweisen. Wenn die Winkelfehler der Laserstrahlenbündel (14) verhältnismäßig klein sind und die Bandbreite der AOMs (21) ausreicht, um die Fehler im Wesentlichen bereits durch eine Ablenkung der Laserstrahlenbündel (14) im AOM (21) zu korrigieren, werden die Winkel (γ) vorzugsweise so gewählt, dass sie, wie bei dem in Fig. 10 dargestellten Multi-Spot-Array, übereinstimmend 90° betragen. Wenn die Winkelfehler größer sind, so dass die zur Verfügung stehende Bandbreite der AOMs (21) zur Korrektur nicht ausreicht, werden die Winkel (γ) vorzugsweise so gewählt, dass sie, wie bei dem in Fig. 12 dargestellten Multi-Spot-Array jeweils 7,13° (entsprechend 90° - arctan lx/d(50%)) betragen, so dass die Abweichungen von der Soll-Position im Wesentlichen durch eine entsprechend angepasste Zeitverzögerung der Spannungssignale korrigiert werden können.

Eine im Wesentlichen übereinstimmende Winkelausrichtung sämtlicher Bildpunkte wird erreicht, wenn die Fiberexits (19) jeweils mit einer solchen Drehlage in Bezug zur Zylinderachse ihrer Kapillarrohre (26) in die Aufnahmenuten (23) der Halterung (18) eingesetzt werden, dass die Pointingfehler sämtlicher Fiberexits (19) in dieselbe Richtung weisen. Die dazu erforderliche Drehlage jedes Fiberexits (19) wird vor dessen Montage in der Halterung (18) des Laserbearbeitungskopfs (6) in einer Justiervorrichtung (nicht dargestellt) ermittelt, in welcher jedes Fiberexit (19) in eine den Aufnahmenuten (23) entsprechende Aufnahmenut eingesetzt und bei eingeschaltetem Laserlicht um seine Achse gedreht wird, während die Position eines vom austretenden Laserstrahlenbündel (14) auf einem Positionsdetektor erzeugten Bildpunkts aufgezeichnet wird. Dieser Bildpunkt beschreibt bei der Drehung der Fiberexits eine Kreisbahn, deren Durchmesser umso größer ist, je größer der Pointingfehler des Fiberexits (19) ist. Immer dann, wenn die Bildpunkte in Bezug zur Achse bzw. in Bezug zu einem entsprechenden Koordinatensystem der Justiervorrichtung eine gewünschte Winkelausrichtung aufweisen, zum Beispiel vertikal oberhalb der Achse liegen, wird eine Markierung auf dem Fiberexit (19) angebracht, die dieser Winkelausrichtung entspricht und zum Beispiel ebenfalls nach oben weist. Nach der Bestimmung der Pointingfehler sämtlicher Fiberexits (19) werden diese so in die Aufnahmenuten (23) der Halterung (18) eingesetzt, dass sämtliche Markierungen in die gleiche Richtung weisen, zum Beispiel wieder nach oben.

Statt mit Markierungen sind die in Fig. 4 dargestellten Fiberexits (19) jeweils mit einer radial über das Kapillarrohr (26) überstehenden Fahne (35) versehen, welche die Richtung des Pointingfehlers des Fiberexits (19) oder einen definierten Winkelabstand von diesem anzeigt. Die Fahne (35) ist Teil einer auf das Kapillarrohr (26) aufgeschobenen drehbaren Zylinderbuchse (36), die in der Justiereinrichtung entsprechend der Richtung des Pointingfehlers auf dem Kapillarrohr (26) festgeklebt wird. Die Fahne (35) weist an ihrem oberen Ende eine Ausrichtkerbe (nicht sichtbar) auf, in die ein oberhalb des Fiberexits (19) ortsfest in die Halterung (18) eingesetzter, zur jeweiligen Aufnahmenut (23) paralleler Ausrichtstift (37) eingreift. Mit dieser Maßnahme wird nicht nur sichergestellt, dass die Fiberexits (19) in der zuvor festgelegten Drehlage in die Aufnahmenuten (23) eingesetzt werden, sondern auch ein späteres Verdrehen der Fiberexits (19) um ihre Achse verhindert.

Um Linienanschluss zu erzielen, d.h. um die Mittenabstände Ix zwischen zwei benachbarten Bildpunkten in axialer Richtung (P) der Trommel (2) so weit zu verringern, dass sich die beiden Punkte (15) bei 50 % der maximalen Intensität, d.h. bei d(50%) überlappen, wird die von den konvergierenden Laserstrahlenbündeln (14) aufgespannte Ebene (E) nach dem Einsetzen der Fiberexits (19) in die Aufnahmenuten (23) durch Drehen des gesamten Laserbearbeitungskopfs (6) um die Achse (A) aus der in Fig. 2 dargestellten Lage in Bezug zur Achse (P) gekippt, so dass das Multi-Spot-Array unter einem Winkel α = arctan Ix/d(50%) = arctan 8/1 = 82,87° zur Trommelvorschubrichtung (P) bzw. unter einem Winkel 90° - α zur Trommelumfangsrichtung (R) ausgerichtet ist, wie in den Figuren 11 und 13 dargestellt. Außerdem werden die einzelnen AOMs (21) des AOM-Arrays (20) in Abhängigkeit von der Drehgeschwindigkeit der Trommel (2) entsprechend zeitverzögert mit den Spannungssignalen beaufschlagt, so dass die acht Laserstrahlenbündel (14) gleichzeitig in Trommelvorschubrichtung (P) nebeneinander auf der lasersensitiven Schicht (13) der Druckplatte (3) auftreffen.

Zur Korrektur der Abweichungen der Bildpunkte von ihren Soll-Positionen werden bei dem in Fig. 11 dargestellten Multi-Spot-Array zudem die Laserstrahlenbündel (14) durch Veränderung der Frequenz der zu den AOMs (21) zugeführten Spannungssignale in einer zur Achse (X) senkrechten Richtung (durch kleine Pfeile angezeigt) so weit abgelenkt, dass die zuvor in diese Richtung gedrehten Bildpunkte (vgl. Fig. 11) auf der Achse (X) zu liegen kommen.

Bei dem in Fig. 13 dargestellten Multi-Spot-Array erfolgt die Korrektur der Abweichungen der Bildpunkte von ihren Soll-Positionen hingegen durch eine unterschiedliche Zeitverzögerung in Trommelumfangsrichtung (R) (durch kleine Pfeile angezeigt), wobei diese Zeitverzögerung für jedes Laserstrahlenbündel (14) so eingestellt wird, dass der zugehörige Bildpunkt auf der Achse (X) zu liegen kommt.

Wenn sich die Winkelausrichtung von einem oder mehreren Bildpunkte nach dem Einsetzen der Fiberexits (19) in die Aufnahmenuten (23) infolge von Fertigungstoleranzen bei der Herstellung der Halterung (18) verändert, wie in Fig. 14 am Beispiel der beiden am weitesten rechts gelegenen Bildpunkte dargestellt, werden die vorgenannten Korrekturschritte (Ablenkung bzw. Laufzeitverzögerung) iterativ durchgeführt, bis die Bildpunkte ihre Soll-Positionen einnehmen.

Die elektronische Korrektur erfolgt mit Hilfe von Testbildern, die jeweils nach der Durchführung eines Korrekturschritts mit Hilfe einer auf die Trommel aufgespannten Test-Druckplatte erstellt werden, wobei die Korrektur solange schrittweise durchgeführt wird, bis keine störenden Muster auf den Testbildern sichtbar sind. Alternativ kann bereits vor dem Belichten der ersten Test-Druckplatte eine Korrektur vorgenommen werden, bei der die in der Justiereinrichtung gemessenen Pointingfehler dem Betrag nach durch eine entsprechende Ablenkung und/oder Zeitverzögerung des jeweiligen Laserstrahlenbündels ausgeglichen werden.

## Patentansprüche

1. Mehrstrahl-Abtastvorrichtung zur Abtastung eines fotoempfindlichen Materials mit einem Multi-Spot-Array, insbesondere zur Laserbelichtung von Film oder zur Lasergravur von Druckplatten, umfassend eine Halterung, die eine Mehrzahl von Aufnahmen für jeweils einen Fiberlaser-Fiberexit aufweist, eine Mehrzahl von lösbar in die Aufnahmen eingesetzten Fiberexits, sowie Einrichtungen zur Unterbrechung, Ablenkung und/oder Intensitätsmodulation von aus den Fiberexits austretenden Laserstrahlenbündeln, **dadurch gekennzeichnet, dass** die Halterung (18) und die Fiberexits (19) mit komplementären Ausrichteinrichtungen (35, 36) versehen sind, die jeweils zur Übereinstimmung kommen oder in gegenseitigen Eingriff treten, wenn ein Fiberexit (19) in der Aufnahme (23) einen zuvor festgelegten Drehwinkel in Bezug zu seiner Achse aufweist, wobei sämtliche Bildpunkte eines durch Abbildung der Fiberexits (19) auf dem fotoempfindlichen Material (3) erzeugten Multi-Spot-Arrays in Bezug zu ihrer Soll-Position im Wesentlichen die gleiche Winkelausrichtung besitzen, sobald die Ausrichteinrichtungen (35) sämtlicher Fiberexits (19) mit den komplementären Ausrichteinrichtungen (36) der Halterung (18) übereinstimmen oder im Eingriff stehen.

2. Mehrstrahl-Abtastvorrichtung nach Anspruch 1, **gekennzeichnet durch** Korrektureinrichtungen zur Verschiebung einzelner Bildpunkte des Multi-Spot-Arrays **durch** elektronische Ablenkung der Laserstrahlenbündel (14) in einer Richtung (Y), die senkrecht zu einer Achse (X) **durch** die Soll-Positionen der Bildpunkte ist.

3. Mehrstrahl-Abtastvorrichtung nach Anspruch 1 oder 2, **gekennzeichnet durch** Korrektureinrichtungen zur Verschiebung einzelner Bildpunkte des Multi-Spot-Arrays **durch** elektronische Verzögerung des Auftreffzeitpunkts der Laserstrahlenbündel (14) auf dem fotoempfindlichen Material (3) in einer Richtung (R), die parallel zur Richtung einer Relativbewegung zwischen der Mehrstrahl-Abtastvorrichtung (6) und dem fotoempfindlichen Material (3) ist.

4. Mehrstrahl-Abtastvorrichtung nach einem der Ansprüche 1 bis 3, **dadurch gekennzeichnet, dass** die Einrichtungen zur Unterbrechung, Ablenkung und/oder Intensitätsmodulation der aus den Fiberexits (19) austretenden Laserstrahlenbündeln (14) eine Mehrzahl von akustooptischen Modulatoren (21) zwischen den Fiberexits (19) und dem fotoempfindlichen Material (3) umfassen.

5. Mehrstrahl-Abtastvorrichtung nach Anspruch 4, **dadurch gekennzeichnet, dass** die akustooptischen Modulatoren (21) als Korrektureinrichtungen zur Verschiebung einzelner Bildpunkte des Multi-Spot-Arrays durch Ablenkung der Laserstrahlenbündel (14) und/oder Verzögerung des Auftreffzeitpunkts der Laserstrahlenbündel (14) auf dem fotoempfindlichen Material (3) dienen.

6. Mehrstrahl-Abtastvorrichtung nach einem der Ansprüche 1 bis 5, **dadurch gekennzeichnet, dass** die Laserstrahlenbündel (14) einen konvergierenden Strahlenbündelfächer bilden.

7. Mehrstrahl-Abtastvorrichtung nach einem der Ansprüche 1 bis 6, **gekennzeichnet durch** ein f-θ -Optiksystem (22) zur telezentrischen Abbildung der Fiberexits (19) auf dem fotoempfindlichen Material (3).

8. Mehrstrahl-Abtastvorrichtung nach einem der Ansprüche 1 bis 7, **dadurch gekennzeichnet, dass** die Ausrichteinrichtungen der Fiberexits (19) jeweils ein radial überstehendes Element (35) umfassen.

9. Mehrstrahl-Abtastvorrichtung nach Anspruch 8, **dadurch gekennzeichnet, dass** das Element (35) über eine Buchse (34) übersteht, die ein zwischen einem Faserlichtleiter (7) und einer Kollimatorlinse (25) des Fiberexits (19) angeordnetes Kapillarrohr (26) umgibt und auf diesem fixiert ist.

10. Mehrstrahl-Abtastvorrichtung nach einem der Ansprüche 1 bis 7, **dadurch gekennzeichnet, dass** die Ausrichteinrichtungen Markierungen auf den Fiberexits (19) und auf der Halterung (18) umfassen, die sich durch Drehung der Fiberexits (19) in den Aufnahmen (23) in Bezug zueinander ausrichten lassen.

11. Vorrichtung zur Belichtung oder Bearbeitung eines fotoempfindlichen Materials mit Laserstrahlenbündeln, insbesondere zur Laserbelichtung von Film oder zur Lasergravur von Druckplatten mit einem Multi-Spot-Array, **gekennzeichnet durch** eine Mehrstrahl-Abtastvorrichtung (6) nach einem der Ansprüche 1 bis 10.

12. Verfahren zur Korrektur der Position von Bildpunkten eines Multi-Spot-Arrays, das durch Abbildung einer Mehrzahl von Fiberlaser-Fiberexits einer Mehrstrahl-Abtastvorrichtung auf einem in Bezug zur Mehrstrahl-Abtastvorrichtung bewegten fotoempfindlichen Material und durch Unterbrechung, Ablenkung und/oder Intensitätsmodulation von aus den Fiberexits austretenden Laserstrahlenbündeln erzeugt wird, **dadurch gekennzeichnet, dass** die Fiberexits (19) jeweils mit einem zuvor festgelegten Drehwinkel in Bezug zu ihrer Längsachse in eine Aufnahme (23) einer Halterung (18) der Mehrstrahl-Abtastvorrichtung (6) eingesetzt werden, so dass sämtliche Bildpunkte in Bezug zu ihrer Soll-Position im Wesentlichen die gleiche Winkelausrichtung aufweisen, und dass anschließend die Abstände der einzelnen Bildpunkte von ihren Soll-Positionen, soweit erforderlich, durch Ablenkung der Laserstrahlenbündel (14) und/oder durch Verzögerung des Auftreffzeitpunkts der Laserstrahlenbündel (14) auf dem fotoempfindlichen Material (3) verkleinert werden.

13. Verfahren nach Anspruch 12, **dadurch gekennzeichnet, dass** die Abstände der einzelnen Bildpunkte verkleinert werden, bis jeder Bildpunkt auf seiner Soll-Position liegt.

14. Verfahren nach Anspruch 12 oder 13, **dadurch gekennzeichnet, dass** die Ablenkung der Laserstrahlenbündel (14) und die Verzögerung des Auftreffzeitpunkts der Laserstrahlenbündel (14) abwechselnd vorgenommen werden, um die Bildpunkte schrittweise an die Soll-Position anzunähern.

15. Verfahren nach einem der Ansprüche 12 bis 14, **dadurch gekennzeichnet, dass** die Laserstrahlenbündel (14) zur Abstandsverkleinerung so abgelenkt werden, dass einzelne Bildpunkte des Multi-Spot-Arrays in einer Richtung (Y) verschoben werden, die senkrecht zu einer Achse (X) durch die Soll-Positionen der Bildpunkte ist.

16. Verfahren nach einem der Ansprüche 12 bis 15, **dadurch gekennzeichnet, dass** der Auftreffzeitpunkt der Laserstrahlenbündel (14) auf dem fotoempfindlichen Material (3) zur Abstandsverkleinerung in einer Richtung (R) verzögert wird, die parallel zur Richtung der Relativbewegung zwischen der Mehrstrahl-Abtastvorrichtung (6) und dem fotoempfindlichen Material (3) ist.

17. Verfahren nach einem der Ansprüche 12 bis 16, **dadurch gekennzeichnet, dass** die Unterbrechung, Ablenkung und/oder Intensitätsmodulation jedes Laserstrahlenbündels (14) nach dessen Austritt aus dem Fiberexit (19) in einem akustooptischen Modulator (21) vorgenommen wird.

18. Verfahren nach Anspruch 17, **dadurch gekennzeichnet, dass** der Auftreffzeitpunkt jedes Laserstrahlenbündels (14) auf dem fotoempfindlichen Material (3) durch eine den Abstand des Bildpunkts von der Soll-Position berücksichtigende zeitliche Steuerung der Zufuhr von Spannungssignalen zum akustooptischen Modulator (21) verzögert wird.

19. Verfahren nach Anspruch 17 oder 18, **dadurch gekennzeichnet, dass** zur Ablenkung jedes Laserstrahlenbündels (14) die Frequenz eines Spannungssignals verändert wird, das zur Unterbrechung, Ablenkung und/oder Intensitätsmodulation des Laserstrahlenbündels (14) am akustooptischen Modulator (21) angelegt wird.

20. Verfahren nach einem der Ansprüche 12 bis 19, **dadurch gekennzeichnet, dass** jedes Fiberexit (19) vor dem Einsetzen in die Aufnahme (23) der Halterung (18) in einer Justiereinrichtung so lange um seine Achse gedreht wird, bis ein vom Fiberexit (19) erzeugter Bildpunkt eine vorgegebene Winkelausrichtung in Bezug zur Drehachse aufweist, und dass jedes Fiberexit (19) in dieser Drehlage mit einer Ausrichteinrichtung (35) versehen wird, die beim Einsetzen in die Aufnahme (23) der Halterung (18) mit einer komplementären Ausrichteinrichtung (36) der Halterung ausgerichtet oder in Eingriff gebracht wird.
